# EUROPÄISCHE PATENTSCHRIFT

(11) **EP 2 094 778 B1**
(45) Veröffentlichungstag und Bekanntmachung des Hinweises auf die Patenterteilung: **22.06.2016**
(21) Anmeldenummer: 07856205.5
(22) Anmeldetag: 21.11.2007
(51) Int. Cl.: C08K 5/10

(54) **VERFAHREN ZUR VERBESSERUNG DER BENETZBARKEIT UND/ODER DES HAFTVERMÖGENS VON KUNSTSTOFFOBERFLÄCHEN, INSBESONDERE ZU ZWECKEN DER ERLEICHTERTEN BEDRUCKBARKEIT**
METHOD FOR IMPROVING THE WETTABILITY AND/OR THE ADHESIVITY OF PLASTIC SURFACES, IN PARTICULAR, TO FACILITATE PRINTING
PROCÉDÉ POUR AMÉLIORER LA MOUILLABILITÉ ET/OU L'ADHÉSIVITÉ DE SURFACES EN PLASTIQUE, NOTAMMENT POUR FACILITER L'IMPRESSION

(30) Priorität: 22.11.2006 DE 102006055384
(43) Veröffentlichungstag der Anmeldung: 02.09.2009
(73) Patentinhaber: Phoenix Contact GmbH & Co. KG, 32825 Blomberg (DE)
(72) Erfinder: JACKE, Joachim, 33100 Paderborn (DE); SCHIERHOLZ, Albrecht, 32816 Schieder-Schwalenberg (DE)
(74) Vertreter: Gesthuysen, Michael
(86) Internationale Anmeldenummer: PCT/EP2007/010075
(87) Internationale Veröffentlichungsnummer: WO 2008/061723

(56) Entgegenhaltungen:
- EP-A- 1 116 964
- DE-A1- 1 952 912
- DE-C- 897 476
- FR-A- 1 246 822
- US-A- 3 008 908
- US-A- 3 516 956
- US-A- 5 683 817
- US-B1- 6 451 479

## Beschreibung

Die vorliegende Erfindung betrifft Verfahren zur Verbesserung der Benetzbarkeit und/oder des Haftvermögens von Kunststoffoberflächen zu Zwecken der erleichterten Bedruckbarkeit, Lackierbarkeit oder Verklebbarkeit, wobei dem Kunststoff zur besseren Verarbeitbarkeit ein metallseifenfreies Gleitmittel als Gleitmittel für den Kunststoff zugesetzt wird.

Kunststoffen, insbesondere Thermoplasten, werden aufgrund einer möglichst einfachen Verarbeitung im allgemeinen sogenannte Gleitmittel zugesetzt, die unmittelbar die Rheologie der Kunststoffschmelze während des Bearbeitungsprozesses beeinflussen. Hierbei sorgen diese Gleitmittel sowohl für eine bessere Gleitwirkung der Polymerketten der Kunststoffe untereinander als auch - infolge ihrer Grenzflächenaktivität - für eine bessere Dispergierung von Additiven (Zusatzstoffen). Weiterhin setzen die Gleitmittel die Friktionswärme im Extruder herab und helfen beim Formen eines Fertigteils aus einem Spritzgießwerkzeug.

Im Rahmen der vorliegenden Erfindung werden als Gleitmittel somit insbesondere Additive bzw. Zusatzstoffe für gefüllte plastische Massen bzw. Kunststoffe, insbesondere Preßmassen und Spritzgußmassen, bezeichnet, welche die Füllstoffe leichter gleitend und die Preßmassen somit leichter verformbar machen. Die Gleitmittel selbst sind in den Kunststoffen, denen sie zugesetzt sind, unlöslich. Für weitergehende Einzelheiten zu dem Begriff Gleitmittel kann insbesondere verwiesen werden auf Römpp Chemielexikon, 10. Auflage, Georg Thieme Verlag Stuttgart/New York, Band 2, 1997, Seite 1553, Stichwort: "Gleitmittel", sowie die dort referierte Literatur, wobei deren diesbezüglicher Offenbarungsgehalt hiermit im vollen Umfang durch Bezugnahme eingeschlossen ist.

Als sogenannte interne Gleitmittel werden bei Kunststoffen, insbesondere bei technischen Polyamiden, aufgrund ihres ausgezeichneten Eigenschaftsprofils häufig hydrophobe Metallseifen, insbesondere Metallseifen der Stearinsäure (z. B. Calciumstearat), eingesetzt.

Der Begriff der Metallseifen, wie er im Rahmen der vorliegenden Erfindung verwendet wird, bezeichnet insbesondere die Salze der Metalle Aluminium, Barium, Calcium, Cadmium, Cobalt, Chrom, Kupfer, Eisen, Lithium, Magnesium, Mangan, Nickel, Blei, Zinn, Strontium und Zink (nicht aber Natrium und Kalium) mit höheren Fett-, Harz und Naphthensäuren (wie z. B. Stearate, Palmitate, Oleate, Linoleate, Resinate, Laurate, Octanoate, Recinoleate, 12-Hydroxystearate, Naphthenate, Tallate und dergleichen). Für weitergehende Einzelheiten zu dem Begriff der Metallsalze kann auf Römpp Chemielexikon, 10. Auflage, Georg Thieme Verlag Stuttgart/New York, Band 4, 1998, Seite 2619, Stichwort: "Metallseifen", sowie die dort referierte Literatur verwiesen werden, wobei deren diesbezüglicher Offenbarungsgehalt hiermit im vollen Umfang durch Bezugnahme eingeschlossen ist.

Es ist jedoch bekannt, daß die Gleitmittel auf Basis von Metallseifen zu einem starken sogenannten Plate-out-Effekt neigen. Das heißt metallseifenbasierte Gleitmittel diffundieren auch während des Verarbeitungsprozesses an die Oberfläche der Kunststoffe und bewirken dort einen Trenneffekt zwischen der Kunststoffoberfläche und einer die Kunststoffoberfläche berührenden Werkzeugwand. Dieser sogenannten Plate-out-Effekt ist durch variierende Inkompatibilitätsgrade der einzelnen Mischungsbestandteile innerhalb der Kunststoffmischung begründet.

Daher erfordern Kunststoffe vor der Verarbeitung, wie z. B. Verkleben, Beschichten, Bedrucken und Lackieren, im allgemeinen eine Aktivierung der Oberfläche, durch welche die Benetzbarkeit bzw. das Haftvermögen der Kunststoffoberfläche in bezug auf flüssige Klebstoffe, Farben, Lacke, Tinte und dergleichen erst ermöglicht wird. Derartige Vorbehandlungsmaßnahmen sind insbesondere Koronavorbehandlung, Beflammung, chemische Vorbehandlung, Plasmavorbehandlung (z. B. mittels Niederdruckplasma), Fluorierung etc.; infolge der dabei stattfindenden Oxidationsprozesse wird die Kunststoffoberfläche polarisiert. Eine andere Form der Vorbehandlung, wie sie beispielsweise in der Automobilindustrie beim Lackieren von Polyamiden eingesetzt wird, ist die sogenannte Primerung der Substrat- bzw. Kunststoffoberfläche mit einem Haftvermittler, um die Affinität in bezug auf die nachfolgende Lackierung zu erhöhen.

Kunststoffe werden auf diese Weise bereits seit längerem bedruckt. Beispielsweise werden Polyamide, z. B. im Siebdruck, schon seit vielen Jahren auch mit lichtaushärtenden, insbesondere UV-lichtaushärtenden Tinten bedruckt, und auch im Papier- und Kartondruck sind UV-aushärtende Tintensysteme schon lange etabliert.

Dennoch kann der zuvor angesprochene Plate-out-Effekt der als Gleitmittel in Kunststoffen verwendeten Metallseifen für eine spätere Bedruckung, insbesondere mit einer UV-aushärtenden Tinte, schädlich sein. Diese Metallseifen, wie z. B. Metallstearate, stören den Bedruckungsprozeß auch dadurch, daß sie mit Bestandteilen des UV-Tintensystems reagieren können und/oder eine Sperrschicht zwischen Tinte und Kunststoffoberfläche bilden und somit die Funktionalität dieser Tinte herabsetzen.

Lichthärtende Tinten enthalten im allgemeinen einen oder mehrere, auf eine vorbestimmte kurze Wellenlänge des Lichtes abgestimmte Fotoinitiatoren. Das bei der Aushärtung ausgestrahlte Licht wird in seiner Wellenlänge so gewählt, daß der Fotoinitiator angeregt und die Tinte zumindest teilweise polymerisiert wird; die Polymerisation der Tinte führt dann zur Viskositätssteigerung und Verfestigung der Tinte, wobei der Grad der Verfestigung von der Dauer der Bestrahlung sowie von der eingestrahlten Strahlungsleistung abhängt. Gängige UV-aushärtende Tinten beruhen zum Teil auf einer UV-lichtquanteninduzierten radikalischen Polymerisation von Acrylaten (wie z. B. Methylmethacrylat); Acrylate besitzen aufgrund der vorhandenen Carboxylgruppen einen polaren Charakter und somit eine gewisse Oberflächenspannung, die in der Literatur mit ca. 16 mN/m für den polaren Anteil dargestellt wird. Hierdurch soll eine gewisse Affinität zum polaren Kunststoff, insbesondere zum polaren Polyamid (Oberflächenspannung, polarer Anteil, ca. 18,1 mN/m) gegeben sein. Infolge des sogenannten Plate-out-Effekts der als Gleitmittel verwendeten Metallseifen (z. B. Metallstearaten) wird aber die Oberflächenspannung der Kunststoffoberfläche herabgesetzt und eine Bedruckung entscheidend verschlechtert. Dies zeigt sich in einem starken Qualitätsunterschied zwischen dem "normalen" Zustand und dem konditionierten Zustand. Hierbei zeigen konditionierte Polyamide gegenüber dem "Standard", der sich schon qualitativ schlecht verhält, einen noch viel schlechteren Kontrast und eine noch viel schlechtere Kratzfestigkeit, wobei diese Qualitätsunterschiede nicht erwünscht sind.

Die EP 1 116 964 A2 offenbart eine UV-härtbare Harzzusammensetzung für die Herstellung von Fresnel-Linsen und ihre Verwendung in Rückprojektionsschirmen. Der Harzzusammensetzung wird zur Verbesserung der Adhäsion ein Weichmacher zugesetzt, wobei als Weichmacher Phthalate, Glycolate, Phosphate und Dibenzoate offenbart werden.

Der Erfindung liegt die Aufgabe zugrunde, ein Verfahren zur Herstellung eines Kunststoffes bereitzustellen, mit dem die Benetzbarkeit und/oder das Haftvermögen von Kunststoffoberflächen (z. B. Polyamidoberflächen) zu Zwecken der erleichterten Bedruckbarkeit, Lackierbarkeit oder Verklebbarkeit verbessert wird, wobei die zuvor geschilderten Nachteile des Standes der Technik zumindest weitgehend vermieden oder aber wenigstens abschwächt sind.

Diese Aufgabe wird durch eine Verfahren mit den Merkmalen des Patentanspruchs 1 gelöst. Die Anmelderin hat überraschenderweise herausgefunden, daß sich die Benetzbarkeit und das Haftvermögen von Kunststoffoberflächen und somit deren Bedruckbarkeit, Lackierbarkeit oder Verklebbarkeit dadurch entscheidend verbessern läßt, daß man den Kunststoffen metallseifenfreie Gleitmittel anstelle der sonst üblichen Metallseifen zusetzt.

Gegenstand der vorliegenden Erfindung ist somit ein Verfahren zur Verbesserung der Benetzbarkeit und/oder des Haftvermögens von Kunststoffoberflächen (d. h. der Oberflächen von Kunststoffmaterialien bzw. Kunststoffwerkstoffen) zu Zwecken der erleichterten Bedruckbarkeit, Lackierbarkeit oder Verklebbarkeit, bei dem dem Kunststoff, insbesondere zur besseren Verarbeitbarkeit des Kunststoffs (z. B. bei der Extrusion, beim Spritzgießen und dergleichen), ein metallseifenfreies Gleitmittel zugesetzt ist, wobei als metallseifenfreies Gleitmittel für den Kunststoff ein Ester einer organischen Carbonsäure, ein Fettsäureester, oder ein Glycerinsäureester eingesetzt wird und wobei der Kunststoff ausgewählt wird aus der Gruppe von Polyamiden, Polyolefinen, Polyurethanen, ABS (Acrylnitril/Butadien/Styrol), PBT (Polybutylenterephthalat) und PC.

Zum Begriff der Metallseifen und der Gleitmittel, wie er im Rahmen der vorliegenden Erfindung verwendet wird, wird auf die vorstehenden Ausführungen verwiesen.

Wenn im Rahmen der vorliegenden Erfindung davon die Rede ist, daß dem Kunststoff ein metallseifenfreies Gleitmittel zugesetzt ist, so ist hierunter zu verstehen, daß es sich entweder um ein einziges Gleitmittel oder aber eine Mischung derartiger Gleitmittel handeln kann.

Denn die Anmelderin hat überraschenderweise herausgefunden, daß durch die Verwendung metallseifenfreier Gleitmittel und somit die vollständige Vermeidung von metallseifenbasierten Gleitmitteln der sogenannte Plate-out-Effekt zumindest weitgehend vermieden bzw. minimiert werden kann, so daß keine störende Sperrschicht auf der Kunststoffoberfläche gebildet wird, welche eine nachfolgende Bedruckung, Lackierung, Färbung oder Verklebung behindern oder verschlechtern könnte.

Neben dem gewünschten Effekt, nämlich daß die als Gleitmittel eingesetzten metallseifenfreien Gleitmittel insbesondere auf Basis von Fettsäureestern nicht bzw. kaum zu einem sogenannten Plate-out-Effekt neigen, sind mit der Verwendung von metallseifenfreien Gleitmitteln noch weitere vorteilhafte Eigenschaften verbunden: So sind die erfindungsgemäß als metallseifenfreie Gleitmittel eingesetzten Fettsäureester amphipolar, wobei ihr hydrophiler Charakter überwiegt. Im Gegensatz zu Metallseifen senken sie auch nicht die Oberflächenspannung von Polyamidoberflächen; im Unterschied hierzu senken Metallseifen die Oberflächenspannung des Wassers und somit, da Polyamide über die Oberfläche Feuchtigkeit aufnehmen, auch die Oberflächenspannung der Polyamidoberflächen. Im Ergebnis sind mit den erfindungsgemäß ausgewählten metallseifenfreien Gleitmitteln weitere positive Eigenschaften der resultierenden Kunststoffoberflächen verbunden.

Erfindungsgemäß wird als metallseifenfreies Gleitmittel für den Kunststoff ein Ester einer organischen Carbonsäure, ein Fettsäureester, besonders bevorzugt ein hydrophiler Fettsäureester, oder ein Glycerinsäureester, eingesetzt. Der Begriff der Fettsäuren, wie er im Rahmen der vorliegenden Erfindung verwendet wird, ist insbesondere eine Gruppenbezeichnung für aliphatische, im allgemeinen gesättigte Carbonsäuren mit nahezu ausschließlich unverzweigter Kohlenstoffkette. Die Bezeichnung geht darauf zurück, daß man schon frühzeitig erkannte, daß die natürlichen Fette und Öle aus den Estern langkettiger Carbonsäuren, insbesondere mit Glycerin, bestehen. Später übertrug man dann den Gattungsnamen der Fettsäuren auf alle Alkancarbonsäuren und deren ungesättigte Vertreter ("Ölsäuren"). Für weitergehende Einzelheiten zu dem Begriff der Fettsäuren kann beispielsweise verwiesen werden auf Römpp Chemielexikon, 10. Auflage, Georg Thieme Verlag Stuttgart/New York, Band 2, 1997, Seiten 1325 bis 1327, Stichwort: "Fettsäuren", sowie die dort referierte Literatur.

Im Rahmen der vorliegenden Erfindung werden als metallseifenfreie Gleitmittel insbesondere solche Fettsäureester eingesetzt, deren Fettsäure eine höhere Fettsäure mit mindestens 10 Kohlenstoffatomen, vorzugsweise mit mindestens 12 Kohlenstoffatomen, ist. Insbesondere ist die Fettsäure des Fettsäureesters eine C₁₀-C₃₀-Fettsäure, insbesondere eine C₁₂-C₂₄-Fettsäure, vorzugsweise eine C₁₄-C₂₀-Fettsäure, besonders bevorzugt Stearinsäure.

Insbesondere wird im Rahmen der vorliegenden Erfindung als metallseifenfreies Gleitmittel ein Fettsäureester eingesetzt, dessen Fettsäure eine gesättigte unverzweigte Fettsäure, insbesondere mit mindestens 10 Kohlenstoffatomen, vorzugsweise mit mindestens 12 Kohlenstoffatomen, ist. Bevorzugt ist die Fettsäure des Fettsäureesters eine gesättigte unverzweigte Fettsäure, insbesondere eine gesättigte unverzweigte C₁₀-C₃₀-Fettsäure, vorzugsweise eine gesättigte unverzweigte C₁₂-C₂₄-Fettsäure, besonders bevorzugt eine gesättigte unverzweigte C₁₄-C₂₀-Fettsäure.

Was den Alkohol (Veresterungsalkohol) des als metallseifenfreies Gleitmittel eingesetzten organischen Carbonsäureesters anbelangt, so handelt es sich hierbei um einen einwertigen oder mehrwertigen Alkohol, insbesondere einen mehrwertigen Alkohol, vorzugsweise einen zwei- bis vierwertigen Alkohol. Erfindungsgemäß bevorzugt ist der Veresterungsalkohol des erfindungsgemäß als metallseifenfreies Gleitmittel eingesetzten organischen Carbonsäureesters ein C₂-C₁₀-Alkohol, insbesondere ein C₃-C₆-Alkohol. Besonders bevorzugt sind Butanol, Isobutanol, Pentanol, Hexanol, Glycerin, Pentaerythrit oder Trimethylolpropan.

Gemäß einer bevorzugten Ausführungsform wird als Fettsäureester ein Stearinsäureester eingesetzt, insbesondere Butylstearat, Isobutylstearat, Hexylstearat, Glycerinmonostearat, Glycerindistearat, Glycerintristearat, Trimethylolpropantristearat oder Pentaerythrittetrastearat sowie deren Mischungen.

Das metallseifenfreie Gleitmittel kann im Rahmen der vorliegenden Erfindung in weiten Mengenbereichen eingesetzt werden. Insbesondere kann das Gleitmittel in Mengen von 0,01 bis 10 Gew.-%, insbesondere 0,1 bis 5 Gew.-%, vorzugsweise 0,3 bis 3 Gew.-%, bezogen auf den hiermit verarbeiteten Kunststoffen, eingesetzt werden. Dennoch kann es einzelfallbedingt oder anwendungsbezogen erforderlich sein, von den vorgenannten Mengen abzuweichen, ohne daß der Rahmen der vorliegenden Erfindung verlassen ist.

Der Wechsel von den hydrophoben Metallsalzen als Gleitmittel hin zu den hydrophilen Fettsäureestern (wie z. B. Hexylstearat, Glycerinsäureester, Glycerinmonostearat, Butylstearat etc.) löst in effizienter Weise das der vorliegenden Erfindung zugrundeliegende Problem, und dies ohne vorangehende aufwendige Vorbehandlungsverfahren. Aufgrund des hydrophilen Charakters und der höheren Molekularmasse neigen die metallseifenfreien Gleitmittel, insbesondere bei der Verwendung in Polyamiden als Kunststoffen, im Vergleich zu den Metallseifen, wie z. B. Calciumstearat, weniger stark zu einem Plate-out-Effekt. Somit ist der negative Einfluß auf die Polarität der Oberfläche weniger stark als im Fall von Metallseifen als Gleitmitteln, so daß sowohl im "normalen" Zustand als auch im konditionierten Zustand der Kunststoffoberflächen (z. B. Polyamidoberflächen) keine Qualitätsunterschiede beispielsweise im Bedruckungsprozeß z. B. mit UV-Tintensystemen festzustellen sind.

Dagegen zeigen - wie die Anmelderin gleichermaßen überraschenderweise herausgefunden hat - etwaige alternative Lösungsmöglichkeiten des der vorliegenden Erfindung zugrundeliegenden Problems, beispielsweise über den Einsatz von Calciumcarbonaten, erhöhten Titandioxidanteilen (als Weißpigment) oder dergleichen, keinen dahingehenden Erfolg.

Im Ergebnis führt das erfindungsgemäße Verfahren zu einer effizienten Verbesserung der Benetzbarkeit und des Haftvermögens von Kunststoffoberflächen und erleichtert somit eine Bedruckbarkeit, Lackierbarkeit, Verklebbarkeit und dergleichen - und dies ohne aufwendige Vorbehandlungsverfahren der Oberfläche der zuvor genannten Art.

Das erfindungsgemäße Verfahren läßt sich auf eine Vielzahl von Kunststoffen anwenden. Insbesondere eignet es sich in bezug auf Thermoplaste. Der Begriff der Thermoplaste (synonym auch als Plastomere bezeichnet), wie er im Rahmen der vorliegenden Erfindung verwendet wird, bezeichnet insbesondere polymere, bei Gebrauchstemperatur weiche oder harte Werkstoffe, die oberhalb der Gebrauchstemperatur einen Fließübergangsbereich besitzen. Thermoplaste bestehen im allgemeinen aus linearen oder verzweigten Polymeren, die im Fall amorpher Thermoplaste oberhalb der Glasübergangstemperatur und im Falle kristalliner und teilkristalliner Thermoplaste oberhalb der Schmelztemperatur prinzipiell fließfähig werden. Sie können im erweichten Zustand durch Pressen, Extrudieren, Spritzgießen oder anderen Formgebungsverfahren zu Formteilen verarbeitet werden. In Bezug auf weitergehende Einzelheiten zu dem Begriff der Thermoplasten kann insbesondere verwiesen werden auf Römpp Chemielexikon, 10. Auflage, Georg Thieme Verlag Stuttgart/New York, Band 6, 1999, Seiten 4505/4506, Stichwort: "Thermoplaste", sowie die dort referierte Literatur, wobei deren diesbezüglicher Offenbarungsgehalt hiermit im vollen Umfang durch Bezugnahme eingeschlossen ist.

Der Kunststoff ist erfindungsgemäß ausgewählt aus der Gruppe von Polyamiden, Polyolefinen, Polyurethanen, ABS (Acrylnitril/Butadien/Styrol), PBT (Polybutylenterephthalat) und PC (Polycarbonaten). Bevorzugt sind Polyamide, d. h. das erfindungsgemäße Verfahren eignet sich insbesondere zur Verbesserung der Benetzbarkeit und/oder des Haftvermögens von Polyamidoberflächen; dennoch eignet es sich grundsätzlich gleichermaßen auch für die anderen vorgenannten Thermoplaste.

Des weiteren hat die Anmelderin herausgefunden, daß sich das zuvor geschilderte, der vorliegenden Erfindung zugrundeliegende Problem der Verbesserung der Benetzbarkeit und/oder des Haftvermögens speziell von Polyamidoberflächen, insbesondere zu Zwecken der erleichterten Bedruckbarkeit, Lackierung oder Verklebbarkeit, auch durch die Erhöhung der Endgruppenzahl des Polyamids beheben läßt. Gegenstand dieser Ausführungsform ist somit ein Verfahren zur Verbesserung der Benetzbarkeit und/oder des Haftvermögens speziell von Polyamidoberflächen zu Zwecken der erleichterten Bedruckbarkeit, Lackierbarkeit oder Verklebbarkeit, bei dem die Endgruppenzahl des Polyamids erhöht wird.

Viele polymere Stoffe haben an den Enden der kettenförmigen oder verzweigten Moleküle besonders reaktionsfähige oder andere funktionelle Gruppen, welche als Endgruppen bezeichnet werden; diesbezüglich kann beispielsweise auf Römpp Chemielexikon, 10. Auflage, Georg Thieme Verlag Stuttgart/New York, Band 2, 1997, Seite 1156, Stichwort: "Endgruppenbestimmung", verwiesen werden.

Bei dem erfindungsgemäßen Verfahren wird erreicht, daß eine nachfolgende Bedruckung, Lackierung, Verklebung oder Färbung der Kunststoffoberflächen, insbesondere Polyamidoberflächen, ohne vorangehende Vorbehandlung erfolgen kann, insbesondere ohne chemische Vorbehandlung, Fluorierung, Koronabehandlung, Beflammung, Plasmabehandlung, Oxidation, Primerung oder dergleichen.

Mit den erfindungsgemäßen Verfahren läßt sich insbesondere die Bedruckbarkeit von Kunststoffoberflächen verbessern, insbesondere die Bedruckbarkeit von Kunststoffoberflächen mit vorzugsweise lichtaushärtenden, insbesondere UV-lichtaushärtenden, Tinten.

Des weiteren läßt sich mit den erfindungsgemäßen Verfahren die Lackierbarkeit von Kunststoffoberflächen in effizienter Weise verbessern. Insbesondere wird hierdurch die Haftung von Lacken, Farben und dergleichen auf Kunststoffoberflächen bzw. die Benetzbarkeit von Kunststoffoberflächen mit Lacken, Farben und dergleichen verbessert.

Weiterhin läßt sich mit den erfindungsgemäßen Verfahren auch eine Verbesserung der Verklebbarkeit von Kunststoffoberflächen erreichen. Insbesondere können hierdurch die Haftung von Klebstoffen auf Kunststoffoberflächen und die Benetzbarkeit von Kunststoffoberflächen mit Klebstoffen erhöht werden.

In besonders bevorzugter Weise wird das erfindungsgemäße Verfahren zur Bedruckung von Kunststoffoberflächen mit vorzugsweise lichtaushärtenden, insbesondere UV-lichtaushärtender, Tinte angewendet. Die Bedruckung der Kunststoffoberfläche kann in kostengünstiger Weise mit einem Tintenstrahldrucker erfolgen, und dies ohne aufwendige Vorbehandlung der Kunststoffoberfläche.

Weitere Ausgestaltungen, Abwandlungen und Variationen der vorliegenden Erfindung sind für den Fachmann beim Lesen der Beschreibung ohne weiteres erkennbar und realisierbar, ohne daß er dabei den Rahmen der vorliegenden Erfindung verläßt.

## Patentansprüche

1. Verfahren zur Verbesserung der Benetzbarkeit und/oder des Haftvermögens von Kunststoffoberflächen zu Zwecken der erleichterten Bedruckbarkeit, Lackierbarkeit oder Verklebbarkeit,
wobei dem Kunststoff zur besseren Verarbeitbarkeit ein metallseifenfreies Gleitmittel als Gleitmittel für den Kunststoff zugesetzt wird,
**dadurch gekennzeichnet,**
**dass** als metallseifenfreies Gleitmittel für den Kunststoff ein Ester einer organischen Carbonsäure, ein Fettsäureester, oder ein Glycerinsäureester eingesetzt wird, und
**dass** der Kunststoff ausgewählt wird aus der Gruppe von Polyamiden, Polyolefinen, Polyurethanen, ABS (Acrylnitril/Butadien/Styrol), PBT (Polybutylenterephthalat) und PC.

2. Verfahren nach Anspruch 1, **dadurch gekennzeichnet, dass** die Fettsäure des Fettsäureesters eine höhere Fettsäure mit mindestens 10 Kohlenstoffatomen, vorzugsweise mit mindestens 12 Kohlenstoffatomen, ist und/oder dass die Fettsäure des Fettsäureesters eine C₁₀-C₃₀-Fertsäure, insbesondere eine C₁₂-C₂₄-Fettsäure, vorzugsweise eine C₁₄-C₂₀-Fettsäure, besonders bevorzugt Stearinsäure, ist.

3. Verfahren nach Anspruch 1 oder 2, **dadurch gekennzeichnet, dass** die Fettsäure des Fettsäureesters eine gesättigte unverzweigte Fettsäure, insbesondere mit mindestens 10 Kohlenstoffatomen, vorzugsweise mit mindestens 12 Kohlenstoffatomen, ist und/oder dass die Fettsäure des Fettsäureesters eine gesättigte unverzweigte Fettsäure, insbesondere eine gesättigte unverzweigte C₁₀-C₃₀-Fettsäure, vorzugsweise eine gesättigte unverzweigte C₁₂-C₂₄-Fettsäure, besonders bevorzugt eine gesättigte unverzweigte C₁₄-C₂₀-Fettsäure, ist.

4. Verfahren nach einem der Ansprüche 1 bis 3, **dadurch gekennzeichnet, dass** der Alkohol des organischen Carbonsäureesters ein einwertiger oder mehrwertiger Alkohol, insbesondere ein mehrwertiger Alkohol, vorzugsweise ein zwei- bis vierwertiger Alkohol, ist und/oder dass der Alkohol des organischen Carbonsäureesters ein C₂-C₁₀-Alkohol, insbesondere ein C₃-C₆-Alkohol, ist und besonders bevorzugt Butanol, Isobutanol, Pentanol, Hexanol, Glycerin, Pentaerythrit oder Trimethylolpropan ist.

5. Verfahren nach einem der Ansprüche 1 bis 4, **dadurch gekennzeichnet, dass** das Gleitmittel in Mengen von 0,01 bis 10 Gew.-%, insbesondere 0,1 bis 5 Gew.-%, vorzugsweise 0,3 bis 3 Gew.-%, bezogen auf den Kunststoff, eingesetzt wird.

6. Verfahren nach einem der Ansprüche 1 bis 5, **dadurch gekennzeichnet, dass** die Kunststoffoberfläche eine Polyamidoberfläche ist, wobei das Polyamid Endgruppen, ausgewählt aus reaktionsfähigen oder funktionellen Gruppen, aufweist, wobei die Endgruppenzahl des Polyamids erhöht wird.

7. Verfahren nach einem der Ansprüche 1 bis 6, **dadurch gekennzeichnet, dass** der Fettsäureester ein hydrophiler Fettsäureester ist.

8. Verfahren nach einem der Ansprüche 1 bis 7, **dadurch gekennzeichnet, dass** der Kunststoff ein Polyamid ist.

9. Verfahren nach einem der Ansprüche 1 bis 8, **dadurch gekennzeichnet, dass** die Kunststoffoberfläche, mittels Extrusion, Spritzguss oder dergleichen erzeugt ist.

10. Verfahren nach einem der Ansprüche 1 bis 9, **dadurch gekennzeichnet, dass** die nachfolgende Bedruckung, Lackierung oder Verklebung der Kunststoffoberfläche, ohne vorangehende Vorbehandlung, insbesondere ohne chemische Vorbehandlung, Fluorierung, Koronabehandlung, Beflammung, Plasmabehandlung, Oxidation, Primerung oder dergleichen, erfolgt.

11. Verfahren nach einem der Ansprüche 1 bis 10 zur Verbesserung der Bedruckbarkeit von Kunststoffoberflächen, insbesondere zur Verbesserung der Bedruckbarkeit von Kunststoffoberflächen mit vorzugsweise lichtaushärtender, insbesondere UVlichtaushärtender, Tinte und/oder zur Verbesserung der Lackierbarkeit von Kunststoffoberflächen und/oder zur Verbesserung der Haftung von Lacken, Farben und dergleichen auf Kunststoffoberflächen und/oder zur Verbesserung der Benetzbarkeit von Kunststoffoberflächen mit Lacken, Farben und dergleichen.

## Claims

1. A method for improving the wettability and/or adhesiveness of plastic surfaces for purposes of improving their ability to be printed, painted or glued,
wherein a metal soap-free lubricant is added to the plastic for better processability,
**characterized in**
**that** an ester of an organic carboxylic acid, a fatty acid ester, or a glyceric acid ester, is used as metal soap-free lubricant for the plastic,
**that** the plastic is chosen from the group consisting of polyamides, polyolefins, polyurethanes, ABS (acrylonitrile/butadiene/styrene), PBT (polybutylene terephthalate) and PC.

2. Method according to claim 1, **characterized in that** the fatty acid of the fatty acid ester is a higher fatty acid with at least 10 carbon atoms, preferably with at least 12 carbon atoms, and/or the fatty acid of the fatty acid ester is a C₁₀-C₃₀ fatty acid, especially a C₁₂-C₂₄ fatty acid, preferably a C₁₄-C₂₀ fatty acid, especially preferably stearic acid.

3. Method according to claim 1 or 2, **characterized in that** the fatty acid of the fatty acid ester is a saturated unbranched fatty acid, especially one with at least 10 carbon atoms, preferably with at least 12 carbon atoms, and/or that the fatty acid of the fatty acid ester is a saturated unbranched fatty acid, especially a saturated unbranched C₁₀-C₃₀ fatty acid, preferably a saturated unbranched C₁₂-C₂₄ fatty acid, especially preferably a saturated unbranched C₁₄-C₂₀ fatty acid.

4. Method according to any one of claims 1 to 3, **characterized in that** the alcohol of the organic carboxylic acid ester is a monohydric or polyhydric alcohol, especially a polyhydric alcohol, preferably a dihydric to tetrahydric alcohol, and/or that the alcohol of the organic carboxylic acid ester is a C₂-C₁₀ alcohol, especially a C₃-C₆ alcohol, and especially preferably butanol, isobutanol, pentanol, hexanol, glycerol, pentaerythritol or trimethylolpropane.

5. Method according to any one of claims 1 to 4, **characterized in that** the lubricant is used in amounts from 0.01-10 wt%, especially 0.1-5 wt%, preferably 0.3-3 wt%, with respect to the plastic.

6. Method according to any one of claims 1 to 5, **characterized in that** the plastic surface is a polyamide surface, wherein the polyamide surface has end groups chosen from responsive or functional groups, wherein the end group count of the polyamide is increased.

7. Method according to any one of claims 1 to 6, **characterized in that** the fatty acid ester is a hydrophilic fatty acid ester.

8. Method according to any one of claims 1 to 7, **characterized in that** the plastic is a polyamide.

9. Method according to any one of claims 1 to 8, **characterized in that** the plastic surface is produced by means of extrusion, injection molding or the like.

10. Method according to any one of claims 1 to 9, **characterized in that** the subsequent printing, painting or gluing of the plastic surface takes place without prior pretreatment, in particular without chemical pretreatment, fluoridation, corona treatment, flame treatment, plasma treatment, oxidation, priming or the like.

11. Method according to any one of claims 1 to 10 for improving the printability of plastic surfaces, especially for improving the printability of plastic surfaces with preferably light-curable, especially UV-curable inks, and/or for improving the paintability of plastic surfaces and/or for improving the adhesion of paints, dyes and the like to plastic surfaces and/or for improving the wettability of plastic surfaces with paints, dyes and the like.

## Revendications

1. Procédé d'amélioration de la mouillabilité et/ou de l'adhésivité de surfaces plastiques dans le but de faciliter l'aptitude à l'impression, l'aptitude au vernissage ou l'aptitude au collage,
selon lequel un lubrifiant exempt de savons métalliques est ajouté au plastique en tant que lubrifiant pour le plastique pour améliorer l'usinabilité,
**caractérisé en ce qu'**un ester d'un acide carboxylique organique, un ester d'acide gras ou un ester de l'acide glycérique est utilisé en tant que lubrifiant exempt de savons métalliques pour le plastique, et
le plastique est choisi dans le groupe constitué par les polyamides, les polyoléfines, les polyuréthanes, l'ABS (acrylonitrile/butadiène/styrène), le PBT (polybutylène téréphtalate) et le PC.

2. Procédé selon la revendication 1, **caractérisé en ce que** l'acide gras de l'ester d'acide gras est un acide gras supérieur contenant au moins 10 atomes de carbone, de préférence au moins 12 atomes de carbone, et/ou **en ce que** l'acide gras de l'ester d'acide gras est un acide gras en C₁₀-C₃₀, notamment un acide gras en C₁₂-C₂₄, de préférence un acide gras en C₁₄-C₂₀, de manière particulièrement préférée l'acide stéarique.

3. Procédé selon la revendication 1 ou 2, **caractérisé en ce que** l'acide gras de l'ester d'acide gras est un acide gras saturé non ramifié, notamment contenant au moins 10 atomes de carbone, de préférence au moins 12 atomes de carbone, et/ou en ce que l'acide gras de l'ester d'acide gras est un acide gras saturé non ramifié, notamment un acide gras saturé non ramifié en C₁₀-C₃₀, de préférence un acide gras saturé non ramifié en C₁₂-C₂₄, de manière particulièrement préférée un acide gras saturé non ramifié en C₁₄-C₂₀.

4. Procédé selon l'une quelconque des revendications 1 à 3, **caractérisé en ce que** l'alcool de l'ester d'acide carboxylique organique est un alcool monovalent ou polyvalent, notamment un alcool polyvalent, de préférence un alcool bi- à tétravalent, et/ou **en ce que** l'alcool de l'ester d'acide carboxylique organique est un alcool en C₂-C₁₀, notamment un alcool en C₃-C₆, et de manière particulièrement préférée le butanol, l'isobutanol, le pentanol, l'hexanol, la glycérine, la pentaérythrite ou le triméthylolpropane.

5. Procédé selon l'une quelconque des revendications 1 à 4, **caractérisé en ce que** le lubrifiant est utilisé en quantités de 0,01 à 10 % en poids, notamment de 0,1 à 5 % en poids, de préférence de 0,3 à 3 % en poids par rapport au plastique.

6. Procédé selon l'une quelconque des revendications 1 à 5, **caractérisé en ce que** la surface plastique est une surface en polyamide, le polyamide comprenant des groupes terminaux choisis parmi les groupes réactifs ou fonctionnels, le nombre de groupes terminaux du polyamide étant élevé.

7. Procédé selon l'une quelconque des revendications 1 à 6, **caractérisé en ce que** l'ester d'acide gras est un ester d'acide gras hydrophile.

8. Procédé selon l'une quelconque des revendications 1 à 7, **caractérisé en ce que** le plastique est un polyamide.

9. Procédé selon l'une quelconque des revendications 1 à 8, **caractérisé en ce que** la surface plastique est formée par extrusion, moulage par injection ou analogue.

10. Procédé selon l'une quelconque des revendications 1 à 9, **caractérisé en ce que** l'impression, le vernissage ou le collage ultérieur de la surface plastique a lieu sans prétraitement préalable, notamment sans prétraitement chimique, fluoration, traitement corona, traitement à la flamme, traitement plasma, oxydation, amorçage ou analogue.

11. Procédé selon l'une quelconque des revendications 1 à 10 pour l'amélioration de l'aptitude à l'impression de surfaces plastiques, notamment pour l'amélioration de l'aptitude à l'impression de surfaces plastiques avec des encres de préférence durcissant à la lumière, notamment durcissant à la lumière UV, et/ou pour l'amélioration de l'aptitude au vernissage de surfaces plastiques et/ou pour l'amélioration de l'adhérence de vernis, de peintures et analogues sur des surfaces plastiques et/ou pour l'amélioration de la mouillabilité de surfaces plastiques avec des vernis, des peintures et analogues.
